(19) **Europäisches Patentamt / European Patent Office / Office européen des brevets**

(11) **EP 3 197 033 A1**

(12) # EUROPEAN PATENT APPLICATION
published in accordance with Art. 153(4) EPC

(43) Date of publication:
26.07.2017 Bulletin 2017/30

(21) Application number: 15842605.6

(22) Date of filing: 17.09.2015

(51) Int Cl.:
*H02M 1/12* (2006.01)   *H02M 7/68* (2006.01)

(86) International application number:
PCT/IB2015/057182

(87) International publication number:
WO 2016/042521 (24.03.2016 Gazette 2016/12)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA

(30) Priority: 17.09.2014 BR 102014023057

(71) Applicant: Universidade Federal De Minas Gerais - UFMG
31270-901 Belo Horizonte - MG (BR)

(72) Inventors:
• DE JESUS CARDOSO FILHO, Braz
31270-901 Belo Horizonte (BR)
• MORAIS PARREIRAS, Thiago
31270-901 Belo Horizonte (BR)

(74) Representative: Winter, Brandl, Fürniss, Hübner, Röss, Kaiser, Polte - Partnerschaft mbB
Patent- und Rechtsanwaltskanzlei
Alois-Steinecker-Strasse 22
85354 Freising (DE)

(54) **METHOD AND APPARATUS FOR ELIMINATING HARMONIC COMPONENTS AND OBTAINING A UNIFORM POWER FACTOR IN ALTERNATING CURRENT-DIRECT CURRENT AND DIRECT CURRENT-ALTERNATING CURRENT CONVERTERS**

(57) The present patent application relates to a method and equipment for eliminating harmonics based on two complementary techniques, namely the elimination of harmonics by selective harmonic elimination pulse-width modulation in conjunction with the multiple-wiring transformer. The association of these two resources is capable of reducing the harmonic distortion of currents to extremely low values, providing a truly unitary power factor. The technology is suitable for low and medium intensity alternating current - direct current and direct current - alternating current converters, which make interface with the electricity network and should have low harmonic distortion of the current because of the high power value involved, and also because of fragility of the electricity network (low power of short circuit at the coupling point).

FIGURE. 1

**Description**

The present patent application comprises method and equipment for eliminating harmonics based on two complementary techniques, namely selective harmonics elimination through pulse width modulation (SHE PWM) in conjunction with the multiple wiring transformer. The association of these two resources is capable of reducing the harmonic distortion of current to extremely low values, providing a truly unitary power factor. The technology is suitable for alternating current - direct current and direct current - alternating current converters of low and medium voltage, which make interface with the electric network and must have low harmonic distortion of the current because of the high power value involved, and also because of fragility of the electric network (low short-circuit power at the coupling point).

The use of three-phase power converters has become usual in industrial and electrical system applications, however, the larger the amount of power to be converted by this equipment the greater the problems related to the quality of energy. These converters (non-linear charges) require non-sinusoidal currents from the electricity network (source of sinusoidal voltage). These currents, in turn, cause a drop in non-sinusoidal voltage in the impedance of the system, giving rise to voltage distortions at the terminals of the charge itself and of others that share the same electrical system. These currents and distorted voltages can be composed by a sum of the fundamental sinusoid (at the same frequency of the network) and of various other sinusoids of multiple frequencies of the fundamental (harmonics) (J. Arrilaga dna N. R. Watson, Power Systems Hormonics, 2nd ed. Chichester, Englan: John Wiley & Sons, 2003).

The presence of these harmonics in an electrical system may cause in-series or parallel resonance with the installed capacitors, for example, for correction of displacement power factor, leading to excessive currents and damage to these capacitors; increase in loss in the copper and iron of transformers and electric machines, causing greater heating of the latter, with possibility of failure of the equipment; torque pulsations on the electric machines, preventing correct control of the charge and causing greater mechanical stress to the equipment; greater loss on electric conductors due to the higher RMS value of the current and the presence of high frequencies (film and proximity effects are a function of the frequency), leading to the need for oversizing the conductors; poor functioning of electronic and telecommunication devices.

Recommended limits and practices for keeping the harmonics at acceptable levels in electrical systems are established in the rule IEEE Std 519 (IEEE Recommended Practices and requirements for Harmonic Control in Power Systems, IEEE STANDARD 519, 1992). The rule IEEE Std 1547 establishes stricter limits in the cases of sources of distributed generation interconnected to the electrical system. The rule IEC 61000-4-7, in turn, establishes the harmonics measuring techniques in energy supplying systems (IEEE Standard for Interconnecting Distributed Resources with Electric Power Systems, IEEE Standard 1547, 2003) (Electromagnetic compatibility (EMC) - Part 4-7: Testing and measurement techniques - General guide on harmonics and interharmonics measurements and instrumentation, for power supply systems and equipment connected thereto, IEC Standard 61000-4-7, 2009).

Besides analyzing the amplitude of each harmonic component (usually with respect to the fundamental), two other indicators are used to indicate qualitatively and quantitatively the degree of distortion of the currents and voltages in a system. They are that of total harmonic distortion (THD), used for voltages and currents, and that of total demand distortion (TDD), used for currents so as to differentiate, to take into account the charge conditions during the measurements (J. Arrilage and N. R. Watson, Power Systems Harmonitc, 2nd etd. Chichester, England: John Wiley & Sons, 2003) (IEEE Systems, IEEE Standard 519, 1992). The two indicators are represented in [1] and [2], wherein they become the same value in the conditions in which the fundamental current is equal to the nominal current of the equipment, a condition that will be considered hereinafter.

$$THD = \frac{\sqrt{\sum_{n=2}^{N} V_n^2}}{V_1} \qquad [1]$$

$$TDD = \frac{\sqrt{\sum_{n=2}^{N} I_n^2}}{I_R} \qquad [2]$$

wherein n is the order of the evaluated harmonics and N is the order of the greater harmonic to be considered in the composition of the indicator. Although theoretically N can be as great as desired, the rule IEEE Std. 519 establishes it as being 50 (IEEE Recommended Practices and requirements for Harmonic Control in Power Systems, IEEE STANDARD 519, 1992), which also meets the IEC 61000-4-7, which establishes the minimum value of 40, and the IEEE Std. 1566, which establishes that the harmonics up to order 49 should be evaluated in the case of converters for driving high-power motor (Electromagnetic compatibility (EMC) - Part 4-7: Testing and measurement techniques - General guide on harmonics and interharmonics measurements and instrumentation, for power supply systems and equipment connected thereto, IEC Standard 6100-4-7, 2009)). (IEEE Standard for Performance of Adjustable Speed AC Drives Rated 375kW and Larger, IEEE Standard 1566, 2005).

In the presence of these harmonics, the power factor of an installation or equipment fails to be only the cosine of the off-phase angle between the voltage and the fundamental current, but also incorporates the harmonics of voltage and current in its calculation, as shown in [3] below. This is the so-called true power factor (W. M. Grady and R. J. Gilleskie, "Hamonics and how they relate to power factor", presented at Proc. EPRI Quality Issues & Opportunities Conf. San Diego, CA, Nov. 1993).

$$pf_{true} = \frac{P_{avg1}}{V_{1rms} \cdot I_{1rms}} \cdot \frac{1}{\sqrt{1+THD_I{}^2}} \qquad [3]$$

The truly unitary power factor depends then on two factors: voltage and fundamental current in phase and absence of significant harmonics of voltage and current. The first requirement is inherent on passive rectifiers in diodes and can be easily obtained on active rectifiers through adequate control of current on components dq (N. Mohan, T. M. Undeland and W. P. Robbins, Power Electronics: Converter, Applications, and Design, 3rd ed. Hoboken, NJ: John Wiley & Sons, 2003) (A. Yazdani and R. Iravani, Voltage-Source, Converters: Modeling, Control and Applications, 1st ed. Hoboken, NJ: John Wiley & Sons, 2010). On the other hand, the second requirement, the reduction of harmonics, is more complex and is a function of the topology of the converter, of the modulation technique adopted and of some additional method of reduction of harmonics (A.-S.A. Luiz and B. J. C. Filho, "Sinusoidal voltages and currents in high power converters", in 34th Annual Conference of IEEE Industrial Electronics, Orlando, Nov. 2008, pp. 3315-3320).

The use of passive rectifiers in three-phase systems causes the appearance of harmonics on the order of h = 6k +/- 1, wherein k = 1, 2, 3... (J. Arrilage and N. R. Watson, Power Systems Harmonitc, 2nd ed. Chichester, England: John Wiley & Sons, 2003). The reduction in the number of harmonics produced may takes place, in this case, by using multiple-wiring transformers, wherein each wiring feeds a rectifier and the angular off-phase between the wirings is properly chosen, so that, in the primary, one obtains greater elimination of harmonics (B. Singh et al., "Multipulse AC-DC converters for improving power quality: A review", IEEE Trans. Power Electron., vol. 23, no. 01, pp. 260-281, Jan. 2008). In this way, the number of secondary wirings (x) defines how many harmonics will be eliminated and the characteristic harmonics in the primary may be generalized by h=6xk +/-1.

A single three-phase transformer of three wirings (Delta-delta-star), for example, generates the necessary off-phase (30°) between its wirings to have on the primary only the harmonics of order h=12k +/- 1. Although transformers of more wirings may be used by decreasing even more the number of harmonics, as occurs with the cascade multilevel converter in which, depending of the level of voltage, transformers of up to 15 wirings can be used (P. W. Hammond,,"A new approach to enhance power quality for medium voltage drives", in Industry Applications Society 42nd Annual Petroleum and Chemical Industry Conf., Denver, CO, 1995, pp. 231-235), this large amount of wirings, combined to the non-conventional off-phase that should exist between them for cancellation of harmonics to occur, brings great complexity and high costs in the production of transformers.

An alternative solution to the use of so complex transformers is by using active converters in which one has control over the triggering of the power semiconductor devices (J.R. Rodriguez et al, "PWM regenerative rectifiers: state of art", IEEE Trans. Ind. Electron., vol. 52, no. 01, pp. 5-22, Feb. 2005). These converters, which are regenerative by nature, can be made, as is the case with the inserting part, in two, three or more levels. The larger the number of levels, the lesser the harmonic distortion of the current required by the converter. In medium-voltage converter, it is already common to use topologies of at least three levels due to the maximum voltage limitation itself of the switches (IGBT and IGCT), which are presently found on the market (A. Volke and M. Hornkamp, IGBT Modules: Technologies, Driver and Application, 1st ed. Munich, Germany: Infinecon, 2011), (J. Rodriguez et al., "Multilevel voltage-source-converter topologies for industrial medium-voltage drives", IEEE Trans. Ind. Electron., vol. 54, no. 06, pp. 2930-2945, Dec. 2007).

The most widely known three-level topologies are that of three-level converter (NPC (Neutral Point Clamped) and that of three-level converters ANPC (Active Neutral Point Clamped) or NPP (Neutral Point Piloted) (A. Nabae, I. Takahashi, H. Akagi, "A new neutral-point-clamed PWM inverter", IEEE Trans. Ind. Appl., vol. IA-17, no. 05, pp. 518-523, Sept./Oct., 1981). (T. Brückener, S. Bernet, and H. Güldner, "The active NPC converter and its loss-balancing control," IEEE Trans. Ind. Electron., Vol. 52, no. 3, pp. 855-868, Jun. 2005), V. Guenegues, et al., "A converter topology for high speed motor drive applications", in European Conf. Power Electronics and Applications, Barcelona, Spain, 2009, pp. 1-8). For the cases in which the convertor feeds a charge in which there is no need for regeneration, alternatives have already been presented for both low voltage and medium voltage of three-level converters that have only the rectifying capacity, keeping in a minimum the same quality of energy of the three-level generative topologies and with the use of a reduced number of semiconductor devices (J. W. Kolar and F. C. Zach, "A novel three-phase utility interface minimizing line current harmonics of high-power teleccomunications rectifier modules", IEEE Trans. Ind. Electron., vol. 44, no. 04, pp. 456-467, Aug. 1997), (Y. Zaho, Y. Li, T. A. Lipo, "Force commutated three level boost type rectifier", in Industry Applications Society Annual Meeting, Toronto, Canada, 1993, pp. 771-777), (M. L. heldwein, S. A. Mussa, I. Barbi, "Three-phase multilevel PWM rectifiers based on conventional bidirectional converter", IEEE Trans. Power Electron., vol. 25, no. 03, pp. 545-549, Mar. 2010).

Although there are various topologies with even more than three levels, like those that make use of flying capacitor, these topologies gain much in complexity and lose cost and reliability due to the increase in the number of components (J. Rodriguez et al., "Multilevel voltage-source-converter topologies for industrial medium-voltage drives", IEEE Trans. Ind. Electron., vol. 54, no. 06, pp. 2930-2945, Dec. 2007). Besides, even the use of three-level converters at low voltage is not very acceptable, since the number of switches is multiplied, at the least, by three with respect to the alternative of two levels.

The pulse-width modulation techniques (PWM) also exert important influence on the harmonic contents of the voltages and currents demanded by active converters. Although the PWM techniques already are widespread, based on carrier waves and space vectors, the limitations imposed on the switching frequency due to the losses on convertors for high-power applications cause harmonics of lower orders to appear (A. M. Hava, R. J. Kerkman, T. A. Lipo, "Single analytical and graphical methods for carrier-cased PWM-VSI drives", IEEE Trans. Power Electron, vol. 14, no. 01, pp. 49-61, Jan. 1999). These harmonics of lower order may have their amplitude reduced by applying LCL filters (M. Liserrre, F. Blaabjerg, S. Hansen, "Design and control of an LCL-filter-based three-phase active rectifier", IEEE Trans. Ind. Appl., vol., 41, no. 05, pp. 1281-1291, Sept./Oct. 2005), but the necessary reactive elements have reasonable cost and size and diminish the total efficiency of the assembly (especially when passive dampening of the filter is necessary).

An alternative that, even with low switching frequencies, presents higher-order harmonics is the selective harmonic elimination (SHE) technique (R. G. Hoft, H. S. Patel, "Generalized techniques of harmonic elimination and voltage control in thyristor inverters: Part I - Harmonic elimination", IEEE Trans. Ind. Appl., vol. IA-9, no. 03, pp. 310-317, May/Jun. 1973), (R. G. Hoft, H. Patel, "Generalized techniques of harmonic elimination and voltage control in thyristor inverters: Part II - Voltage control techniques". IEEE Trans. Ind. Appl., vol. IA-10, no. 05, pp. 666-673, Sept. /Oct. 1974). Although this technique is more difficult to implement and raises its first non-eliminated harmonics (B. K. Bose, Modern Poer Electronics, and AC Drives, 1st ed. Upper Saddle River, NJ: Prentice Hall, 2002), these well-known harmonics of higher order can be eliminated through filters with smaller reactive elements and through the use of resonant arms (A. -S.A. Luiz, B. J.C. Filho, "Analysis of passive filters for high power three-level rectifiers", 34th Annual Conf. IEEE Industrial Electronics, Orlando, 2008, pp. 3207-3212), (A.-S.A. Luiz, B.J.C. Filho, "Minimum reactive power filter design for high power converters", in 13th Power Electronics Motion Control Conf., Poznan, Poland, 2008, pp. 1345-1352).

According to J.I Pontt et al., a topology is proposed for the purpose of meeting the requirements of the IEEE Std. 519, using a combination of three-level converters, SHE PWM modulation (for 3 and 5 pulses) and three-wiring transformer (J. Pontt, J. Rodriguez and R. Huerta, "Mitigation of none-limited harmonics of SHE PWM three-level multiphase three-phase active front end converters with low switching frequency for meeting standards IEEE-519-92", IEEE Trans. Power Electron., vol. 19, no. 06, pp. 1594-1600, Nov. 2004), (IEEE Recommended Practices and Requirements for Harmonic Control in Power Systems, IEEE Standard 519, 1992). This proposition proved to be effective in reducing the harmonics to interesting levels with low switching frequency and without using filters with capacitive elements. However, it is still not capable of producing a truly unitary power factor, because it still has harmonics within the ranges applicable in the calculation of [1] and [3] (IEEE Recommended Practices and Requirements for Harmonic Control in Power Systems, IEEE Standard 519, 1992), (Electromagnetic compatibility (EMC) - Part 4-7:Testing and measurement techniques - General guide on harmonics and interharmonics measurements and instrumentation, for power supply systems and equipment connected thereto, IEC Standard 61000-4-7,2009), (IEEE Standard for Performance of Adjustable Speed AC Drives Rated 375kW and Larger, IEEE Standard 1566,2005). Besides, because this topology uses only three-level converters, it still presents a high cost for low-voltage applications due to the use of an excessive number of semiconductor elements.

Document US5835364, entitled "HARMONIC ELIMINATING PWM CONVERTER" of November 10, 1998, relates to a converter that uses transformer and PWM modulation, but not the harmonics selective elimination technique. The need to use capacitor banks is an unfavorable characteristic for the use thereof.

The equipment proposed in the present invention is a converter capable of eliminating harmonics and operating with unitary power factor. The functioning characteristics presented herein are achieved by means of the process that uses two complementary strategies, namely selective harmonics elimination through pulse-width modulation associated to the use of multiple-wiring transformer.

**BRIEF DESCRIPTION OF THE FIGURES**

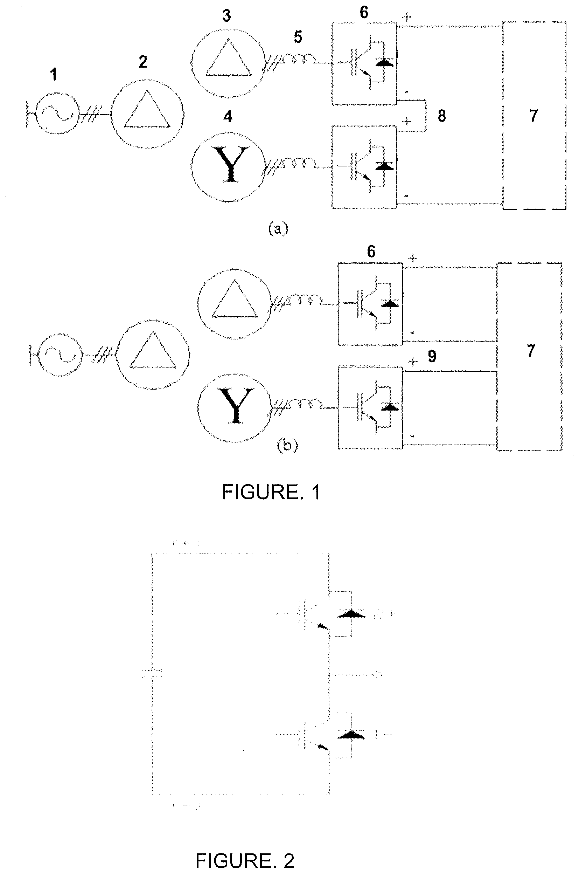

**FIGURE 1 -** Figure 1 shows the generic topology of the converter proposed and its basic elements: a conventional three-wiring transformer (2), (3) and (4) with connections Dd0y1 or Dd0y11 (according to IEC 60076-1) having its primary (2) connected to the electrical network (1) and each of its secondary (3) and (4) connected to a converter (6) switching through the 9-pulse SHE PWM method. The output in direct current of the converters may be kept at individual bars FIGURE 1 (b) to enable a parallel connection of the converters on the side of the charge and thus greater current available, or be connected in series FIGURE 1(a) to obtain a higher voltage value on the direct-current bar.

**FIGURE 2 -** Figure 2 indicates a conventional two-level converter with converting or inverting operation capacity.

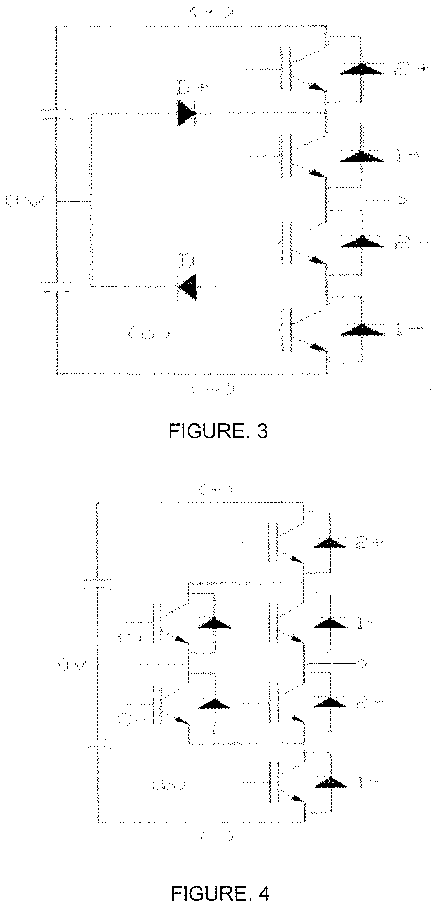

**FIGURE 3 -** Figures 3 indicates a phase representation of the NPC three-level converter topology with operation capacity in four quadrants.

**FIGURE 4 -** Figure 4 indicates a phase representation of the ANPC three-level converter with operation capacity in four quadrants.

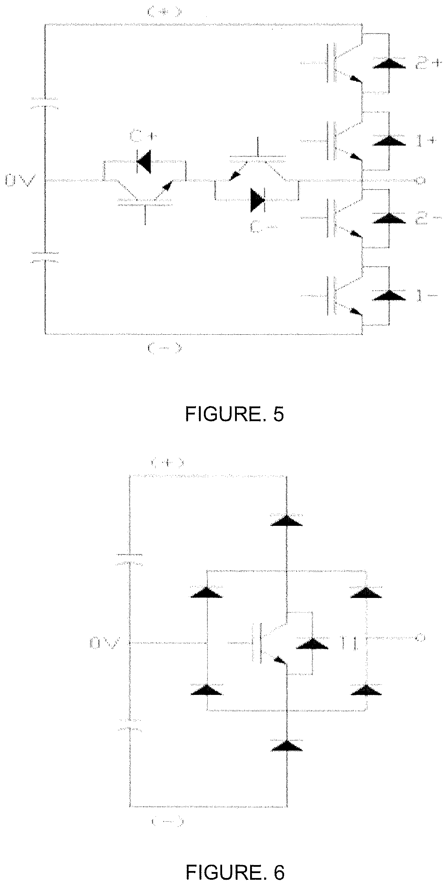

**FIGURE 5 -** Figure 5 indicates a phase representation of the NPP three-level converter with operation capacity in four quadrants.

**FIGURE 6 -** Figure 6 indicates a phase representation of the Vienna converter topology, in which there is only the possibility of power flow in the converter-to-charge direction.

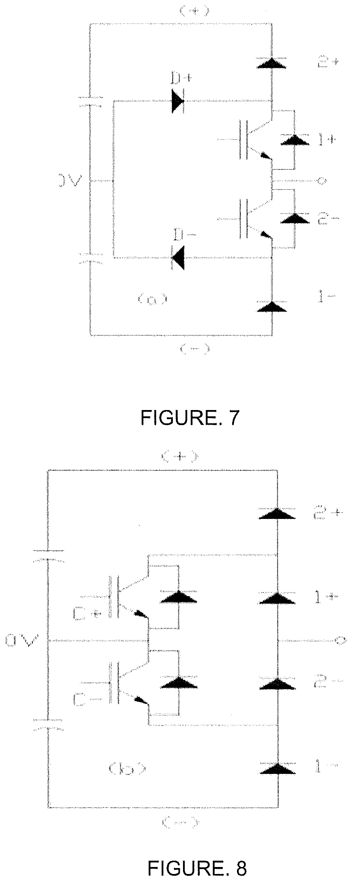

**FIGURE 7 -** Figure 7 shows a phase representation of the three-level raising converter with forced commutation, in which there is only the possibility of power flow in the converter-to-charge direction.

**FIGURE 8 -** Figure 8 shows a phase representation of the three-level converter topology in the NPC topology, in which there is only the possibility of power flow in the converter-to-charge direction.

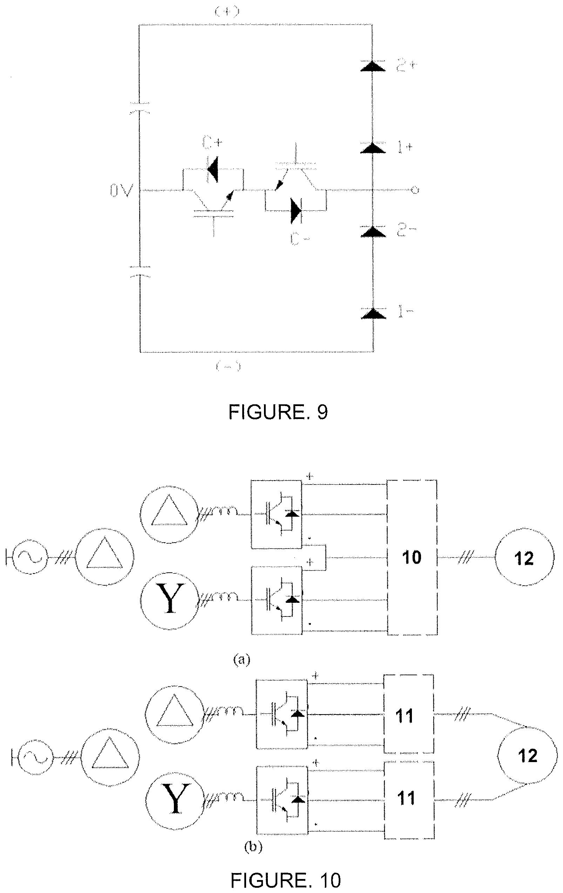

**FIGURE 9 -** Figure 9 shows a phase representation of the three-level converter topology, based on the NPP topology, in which there is only the possibility of power flow in the converter-to-charge direction.

**FIGURE 10 -** Figure 10 shows two topologies, in which multi-level converters (10), (11) are used to feed a motor or generator (12) at voltages of up to 9 kVrms. The direct current bar can be connected in series, enabling one to obtain 5 voltage levels from the converter and, consequently, beeing possible to use a converter at 5 levels (10) on the side of the machine (Figure 10(a)). Alternatively, the direct current bar can independently feed converters at 3 levels (11), which feed a machine with the 6 accessible terminals of the coil (Figure 10(bb).

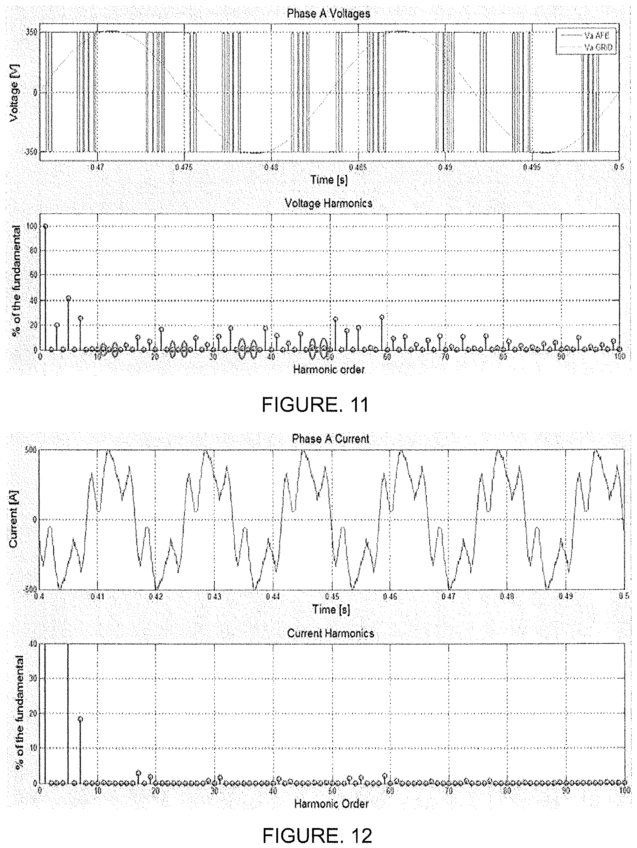

**FIGURE 11** - Figure 11 shows the simulation data for a two-level converter. The simulated data are related to a phase, represented in the figure as phase A. In the first graph, on the ordinate axis, the voltage is represented at Volts, switched by the converter, evidenced by the pulses in square wave; the sinusoidal reference associated to the pulses resulting from the PWM modulation is represented in the same graph; the time in seconds is represented on the abscissa axis. The harmonic spectrum resulting from the voltage switched by the converter is represented in the second graph; the voltage of the harmonics expressed as a percent value with respect to the amplitude of the voltage of the fundamental component is represented on the ordinate axis; the order of the harmonics is represented on the abscissa axis.

**FIGURE 12** - Figure 12 shows the simulation data for a two-level converter. The simulated data are related to a phase, represented in the figure as phase A. In the first graph, the current on the secondary wiring of the transformer in Amperes is represented on the ordinate axis;, the time in seconds is represented on the abscissa axis. The harmonic spectrum associated to the current that circulates in the secondary wiring of the transformer is represented in the second graph. The current intensity of each harmonic expressed as a percentage value with respect to the amplitude of the current of the fundamental component is represented on the ordinate axis; The order of the harmonics is represented on the abscissa axis.

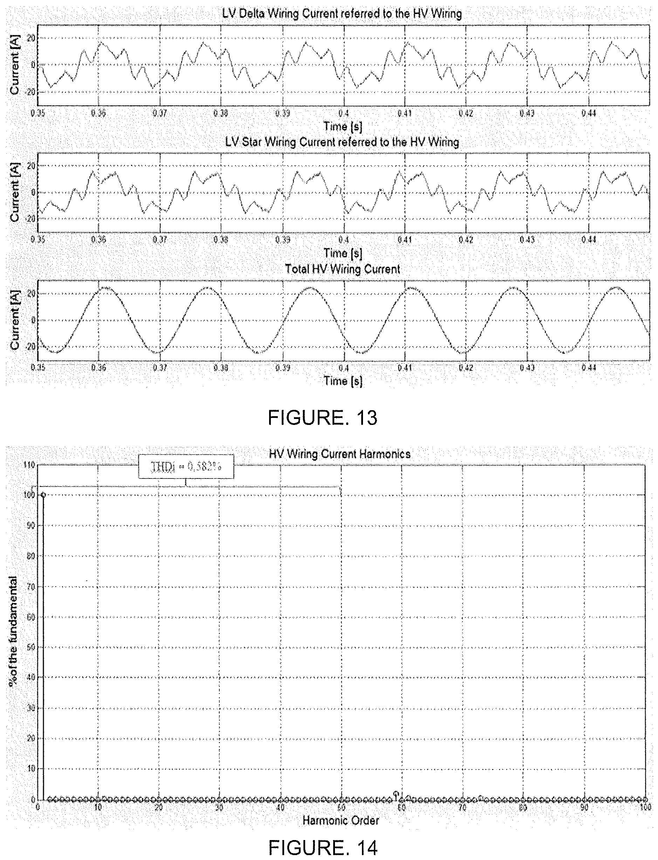

**FIGURE 13** - Figure 13 shows the simulation data for a two-level converter. The simulated data are related to a phase, represented in the figure as phase A. In the first graph, the current on the primary wiring of the transformer in Amperes, reflected from the secondary wiring (primary and secondary in Delta connection) is represented on the ordinate axis; the time in seconds is represented on the abscissa axis. In the second graph, the current in the primary wiring of the converter in Amperes, reflected from the secondary wiring (primary in delta and secondary in star) is represented on the ordinate axis; the time in seconds is represented on the abscissa axis. In the third graph, one represents the total current in the primary wiring of the converter in Amperes, reflected from the two secondary wirings, is represented on the ordinate axis; the time in second is represented on the abscissa axis.

**FIGURE 14** - Figure 14 shows the simulation data for a two-level converter. The simulated data relates to a phase, represented in the figure as phase A. The harmonic spectrum associated to the total current that circulates on the primary wiring of the transformer in Ampere is represented in the graph; The current intensity of each harmonic, expressed as a percentage value, with respect to the amplitude of the current of the fundamental component is represented on the ordinate axis; The order of the harmonics is represented on the abscissa axis. The total harmonic distortion of the current that circulates through the primary wiring of the transformer equal to 0.582% is indicated in the graph.

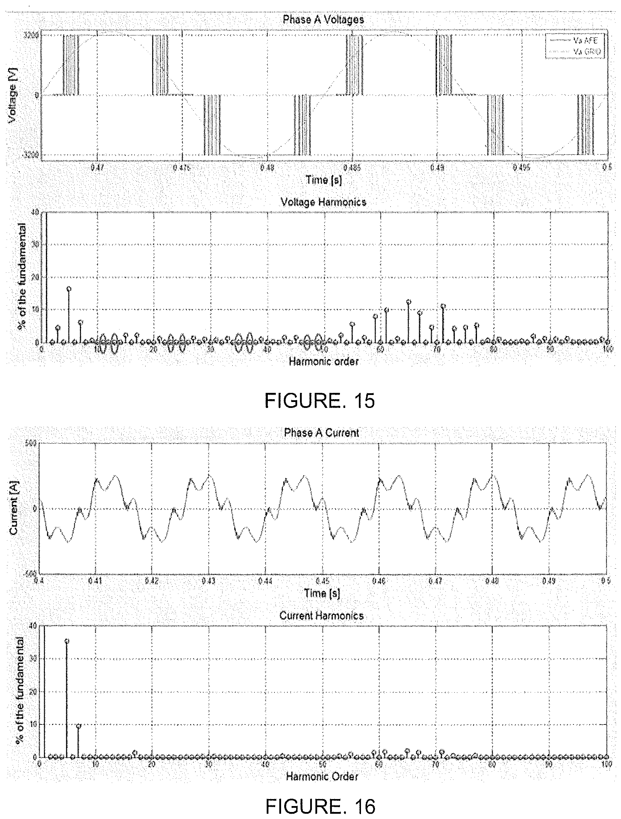

**FIGURE 15** - Figure 15 shows the simulation data for a three-level converter. The simulated data relates to a phase, represented in the figure as phase A. In the first graph, the voltage in Volts, switched by the converter, evidenced by the pulses in square wave is represented on the ordinate axis; The sinusoidal reference associated to the pulses resulting from the PWM modulation is represented in the same graph; the time in seconds is represented on the abscissa axis. The harmonic spectrum resulting from the voltage switched by the converter is represented in the second graph; The voltage of the harmonics expressed as a percentage value with respect to the amplitude of the voltage of the fundamental components is represented on the ordinate axis; the order of the harmonics is represented on the abscissa axis.

**FIGURE 16 -** Figure16 shows the simulation data for a three-level converter. The simulated data relates a phase, represented in the figure as phase A. In the first graph, the current on the secondary wiring of the transformer in Amperes is represented on the ordinate axis; the time in seconds is represented on the abscissa axis. The harmonic spectrum associated to the current that circulates in the second wiring of the transformer is represented in the second graph; the current intensity of each harmonic component expressed as a percentage value with respect to the amplitude of the current of the fundamental component is represented on the ordinate axis; the order of the harmonics is represented on the abscissa axis.

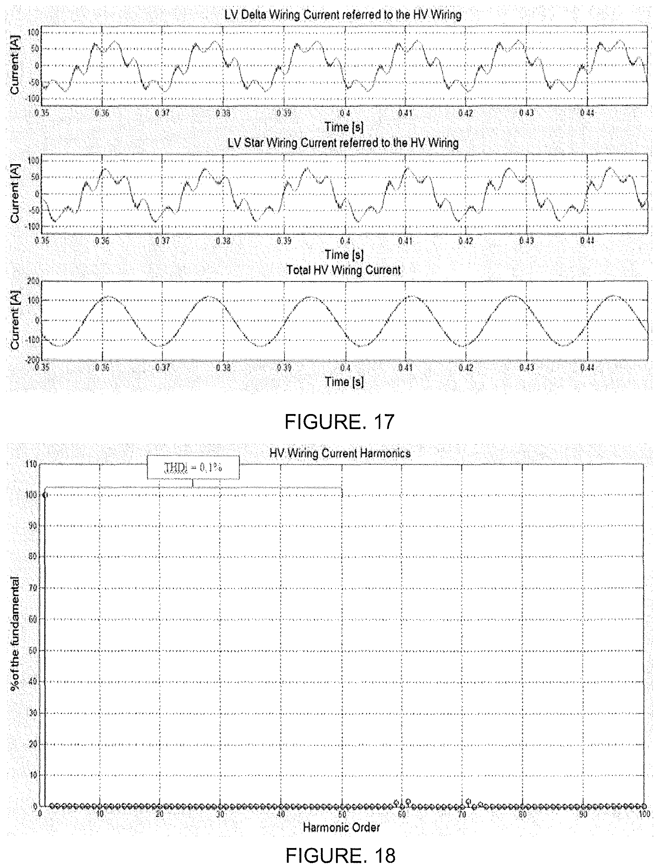

**FIGURE 17** - Figure 17 shows the simulation data for a three-level converter. The simulated data relates to a phase, represented in the figure as phase A. In the first, graph, the current on the primary wiring of the transformer in Amperes, reflected from the secondary wiring (primary and second Delta connection) is represented on the ordinate axis; the time in seconds is represented on the abscissa axis. In the second graph, the current on the primary wiring of the transformer in Amperes, reflected from the secondary wiring (primary in delta and secondary in star) is represented on the ordinate axis; the time in seconds is represented on the abscissa axis. In the second graph, the total current on the primary wiring of the transformer in Ampere, reflected from the two secondary wirings is represented on the ordinate axis; the time in seconds is represented on the abscissa axis.

**FIGURE 18** - Figure 18 shows the simulation data for a three-level converter. The simulated data relates to a phase, represented in the figure as phase A. The harmonic spectrum associated to the total current that circulates on the primary wiring of the transformer in Amperes is represented in the graph; the current intensity of each harmonic component expressed as a percentage value with respect to the amplitude of the current of the fundamental component is represented on the ordinate axis; the order of the harmonic components is represented on the abscissa axis. The total harmonic distortion of the current that circulates through the primary wiring of the transformer equal to 0.1% is indicated in the graph.

## DETAILED DESCRIPTION OF THE TECHNOLOGY

The present technology involves a method and a piece of equipment to eliminate harmonics.

The method for elimination of harmonics comprises the following steps:

a) eliminating harmonics of the h order, defined by the expression h=6k +/-1, by using three-wiring transformers, wherein k= {1,3,5,7...};
b) eliminating harmonics of h order, defined by the expression h=12k+/- 1, wherein k= {1,2,3,4,...}, y using selective harmonic elimination pulse-width modulation (SHE PWM).

The order of harmonics to be eliminated at steps "a" and "b" may be equal to or higher than 50. At step "b" the most indicated SHE PWM type of modulation is that of 9 pulses.

The proposed equipment is a converter capable of eliminating harmonics and operating with unitary power factor. The functioning characteristics presented are achieved by means of the method described above, which uses two complementary strategies, namely selective harmonic elimination by pulse-width modulation associated to the use of a multiple wiring transformer. The non-limiting generic topology of the device is presented in figure 1. The equipment comprises a multiple wiring transformer composed by primary wiring (2), at least one pair of secondary wirings, one configured delta connection (3) and the other configured in star (4); wherein each secondary wiring is connected individually to a converter (6) switched by means of pulse-width modulation with selective harmonic elimination. The proposed equipment may contain multiple pairs of secondary wiring (3), and (4) connected to multiple converters (6), configuring repetitions of the basic unit, which includes a pair of secondary wirings (3) and (4) and the converters connected individually to these wirings.

The reduction of the number of harmonics produced occurs by using multiple-wiring transformers, wherein each wiring feeds a converter, and the angular off-phase between the wirings is chosen so that in the primary wiring an elimination of harmonics is obtained. In this way, the number of secondary wirings defines how many harmonics will be eliminated. A single three-phase three-wiring transformer (Delta-delta-star), for example, generates the necessary off-phase (30°) between its wirings so as to have in the primary one only the harmonics of th h order (defined by the expression h=12k +/- 1, wherein k= {1, 2, 3...}). The obtainment of the sinusoidal current on the first primary wiring of the transformer (free from harmonics up to the order 50) also takes place due to the fact that the converters in question have the SHE PWM angles calculated so as to eliminate the harmonics that are not eliminated by the connection of the transformer itself, which are those of the h order (defined by the expression h=12k +/- 1, wherein k= {1,2,3,4...}), by using pulse-width modulation with selective harmonic elimination (SHE PWM), as indicated in Table 1, which shows the values of harmonics to be eliminated in that case where the number of wirings of the transformer is equal to three. The even pairs are not characteristics due to the symmetry of one fourth of wave and the triple harmonics are cancelled between phases due to three-wire three-phase connection.

Table 1 - orders of the harmonics eliminated by each element.

| Element | Harmonics to be eliminated (order) |
| --- | --- |
| Transformer (three wirings) | 5, 7, 17, 19, 29, 31, 41, 43 |
| Converter (SHE PWM, nine pulses) | 111, 13, 23, 25, 35, 37, 47, 49 |

The output of the direct current of the converters may be kept on individual bars (figure 1 (b)) to enable a parallel connection of the converters on the charge side and so to obtain greater current available, and it may also be connected in series to obtain a higher voltage value on the direct-current bar (figure 1 (a)). The voltage and current measurements necessary to the synchronism with the network and to the control of the converter may be take on both the primary side (preferable) and the secondary ones.

The converters (6) may have different topologies according to the levels of voltage and current involved in the commutation and blockage of the switches, as well as the need or no need for bidirectional power flow. Figures 2-9 indicate the multilevel topologies that may be adopted for the converters, and may be of the types: NPC, ANPC, NPP, Vienna Converter, raising Converter with forced commutation.

Figure 2 indicates a conventional two-level converter with converting or inversing operation capacity. The other figures indicate three-level topologies, wherein the topologies presented in figures 3-5 indicate the converters NPC, ANPC and NPP, respectively. All these also with operation capacity in four quadrants. On the other hand, figures 6-9 indicate the possible three-level topologies, wherein there is only the need for power flow in the converter-to-charge direction and, therefore, the number of active switches may be reduced.

Figure 10 shows an application of the method proposed herein in a preferred configuration of the converter, wherein it is implemented with a transformer with two secondary wirings (3) and (4), three-level converters (6) (figures 3-5 and 7-8) for elimination of a motor (12) or generator (12) on voltages on the order of up to 9 kVrms. The direct-current bar may be connected in series, enabling one to obtain five voltage levels (10) from the converter and, as a result, it is possible to use a inverter at 5 levels on the machine side (figure 10(a)), or the direct-current bars can feed, in an independent way, converters at 3 levels (11), which feed a machine with the six accessible terminals of the coil (figure 10(b)). This is the less complex configuration of the equipment, since it uses the smaller number of transformer wirings and, therefore, is economically interesting and reliable.

**Example 1 - Results of the simulations carried out**

Results of the simulations carried out by using the tools Simulink® of the MATLAB® for both a low-voltage system by applying two-level converters (data of the simulated system in table 2) and a medium-voltage application by using three-level converters (data of the simulated system in table 3). The transformer used in the simulation is composed of three wirings.

Table 2 - Data of the low-voltage simulated system by applying two-level converters.

| Element/Variable | Simulation Value |
| --- | --- |
| Network voltage (Vrms) | 13800 |
| Voltage of the secondary (Vrms) | 440 |
| Network frequency (Hz) | 60 |
| Input inductance (mH) | 0.5 |
| Type of SHE PWM [pulse] | 9 |
| Current reference Id [A] | -370° |
| Current reference Iq [A] | 0* |
| * - referring to each secondary | |

Table 3 - Data of the medium-voltage simulated system applying three-level converters.

| Element/Variable | Simulation value |
| --- | --- |
| Network voltage [Vrms] | 13800 |
| Voltage of the secondary [Vrms] | 4160 |
| Network frequency (Hz) | 60 |
| Input inductance [mH] | 4 |
| Type of SHE PWM [pulses] | 9 |
| Current reference td [A] | -207* |
| Current reference Iq [A] | 0* |
| *- referring to each secondary | |

The results achieved from the simulations are arranged in graphs. In figures 11-14 are the results for the simulation of two-level converter, including the voltage waves (and harmonic spectrum) switched by the converter, the current (and spectrum) on the second transformer, the currents of the secondary reflected to the primary and the current resulting on the primary, and the harmonic spectrum of the current on the primary of the transformer, respectively. Figures 15-18 indicate the same results for the case of using three-level converters.

In all the results one can observe that, although the currents are highly distorted on the secondary wirings of the transformer, the selective elimination in conjunction with the three-wiring transformer was capable of producing an extremely low total harmonic distortion of current on the primary (calculated up to 50° harmonic). These THD applied in equation [3] result in a truly unitary power factor. This has been achieved with converters whose switching frequencies were 1140 Hz for two-level converters and of 1080 Hz (540 Hz per switch) in the case of three-level converters.

**Claims**

1.   A method for eliminating harmonics, **characterized by** comprising the following step:

   a) eliminating of harmonics of h order, defined by the expression h=6k +/- 1, by using three-wiring transformers, wherein k={1,3,5,7,...};
   b) eliminating harmonics of h order, defined by the expression h=12k +/- 1, wherein k= {1,2,3,4,...}, by using selective harmonic elimination pulse-width modulation (SHE PWM).

**2.** The method for elimination of harmonics, according to claim 1, steps *"a"* and *"b"*, **characterized in that** the order of harmonics to be eliminated may be equal to or higher than 50.

**3.** The method of eliminating harmonics according to claim 1, step *"b"*, **characterized in that** the type of selective harmonic elimination pulse-width modulation is preferably of 9 pulses.

**4.** Equipment for eliminating harmonics, **characterized by** comprising a multiple-wiring transformer composed by a primary wiring (2), at least one pair of secondary wirings, one of them being configured in delta connection (3) and the other in star connection (4); wherein each secondary wiring is connected individually to a converter (6) switched by means of selective harmonic elimination pulse-width modulation.

**5.** The equipment for eliminating harmonics according to claim 4, **characterized in that** it may contains multiple-pairs of secondary wirings (3) and (4) connected to multiple converters (6), configuring repetitions of the basic unit that includes the pair of secondary wirings (3) and (4) and the converters individually connected to these wirings.

**6.** The equipment for eliminating harmonics, according to claim 4 or 5, **characterized by** containing a multiple-wiring transformer, but preferably two secondary wirings.

**7.** The equipment for eliminating harmonics, according to claim 4, **characterized in that** the converters may be associated either in series or in parallel.

**8.** The equipment for eliminating harmonics, according to claim 4, **characterized in that** the converters may be multilevel of types NPC, ANPC, NPP, Vienna Converter, raising Converter with forced commutation.

FIGURE. 1

FIGURE. 2

FIGURE. 3

FIGURE. 4

FIGURE. 5

FIGURE. 6

FIGURE. 7

FIGURE. 8

FIGURE. 9

(a)

(b)

FIGURE. 10

FIGURE. 11

FIGURE. 12

FIGURE. 13

FIGURE. 14

FIGURE. 15

FIGURE. 16

FIGURE. 17

FIGURE. 18

## INTERNATIONAL SEARCH REPORT

| International application No. |
| --- |
| **PCT/IB2015/057182** |

**A. CLASSIFICATION OF SUBJECT MATTER**

**H02M1/12 (2006.01), H02M7/68 (2006.01)**

According to International Patent Classification (IPC) or to both national classification and IPC

**B. FIELDS SEARCHED**

Minimum documentation searched (classification system followed by classification symbols)

**H02M**

Documentation searched other than minimum documentation to the extent that such documents are included in the fields searched

Electronic data base consulted during the international search (name of data base and, where practicable, search terms used)

**EPODOC, ESPACENET**

**C. DOCUMENTS CONSIDERED TO BE RELEVANT**

| Category* | Citation of document, with indication, where appropriate, of the relevant passages | Relevant to claim No. |
| --- | --- | --- |
| X | EP 2051361 A1 (MEIDENSHA ELECTRIC MFG CO LTD [JP])<br>22 April 2009 (2009-04-22)<br>Abstract and figures 1 to 4<br>-------------------------------------------- | 1 a 8 |
| X | JP 2008295149 A (HITACHI LTD)<br>04 December 2008 (2008-12-04)<br>Abstract and figures 1, 2, 5 to 6<br>-------------------------------------------- | 1 a 8 |

| ☐ Further documents are listed in the continuation of Box C. | ☒ See patent family annex. |
| --- | --- |

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **28/01/2016** | 15/02/2016 |

| **INPI**<br>INSTITUTO NACIONAL DA PROPRIEDADE INDUSTRIAL<br>Rua Sao Bento nº 1, 17º andar<br>cep: 20090-010, Centro - Rio de Janeiro/RJ | Authorized officer |
| --- | --- |
| Facsimile No.  +55 21 3037-3663 | **Cesar Vianna Moreira Junior**<br>Telephone No.  +55 21 3037-3493/3742 |

Form PCT/ISA/210 (second sheet) (January 2015)

International application No.

PCT/IB2015/057182

| EP 2051361 A1 | 2009-04-22 | CN 101461123 A | 2009-06-17 |
| | | JP 2007318847 A | 2007-12-06 |
| | | JP 4793096 B2 | 2011-10-12 |
| | | RU 2379817 C1 | 2010-01-20 |
| | | WO 2007135968 A1 | 2007-11-29 |
| JP 2008295149 A | 2008-12-04 | JP 4512117 B2 | 2010-07-28 |
| | | CN 101355321 A | 2009-01-28 |

Form PCT/ISA/210 (patent family annex) (January 2015)

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

## Patent documents cited in the description

- US 5835364 A

## Non-patent literature cited in the description

- **J. ARRILAGA DNA N. R. WATSON.** Power Systems Hormonics. John Wiley & Sons, 2003
- **J. ARRILAGE ; N. R. WATSON.** Power Systems Harmonitc. John Wiley & Sons, 2003
- **W. M. GRADY ; R. J. GILLESKIE.** Hamonics and how they relate to power factor. *Proc. EPRI Quality Issues & Opportunities Conf.,* November 1993
- **N. MOHAN ; T. M. UNDELAND ; W. P. ROBBINS.** Power Electronics: Converter, Applications, and Design. John Wiley & Sons, 2003
- **A. YAZDANI ; R. IRAVANI.** Voltage-Source, Converters: Modeling, Control and Applications. John Wiley & Sons, 2010
- **A.-S.A. LUIZ ; B. J. C. FILHO.** Sinusoidal voltages and currents in high power converters. *34th Annual Conference of IEEE Industrial Electronics,* November 2008, 3315-3320
- **B. SINGH et al.** Multipulse AC-DC converters for improving power quality: A review. *IEEE Trans. Power Electron.,* January 2008, vol. 23 (01), 260-281
- **P. W. HAMMOND.** A new approach to enhance power quality for medium voltage drives. *Industry Applications Society 42nd Annual Petroleum and Chemical Industry Conf.,* 1995, 231-235
- **J.R. RODRIGUEZ et al.** PWM regenerative rectifiers: state of art. *IEEE Trans. Ind. Electron,* February 2005, vol. 52 (01), 5-22
- **A. VOLKE ; M. HORNKAMP.** IGBT Modules: Technologies, Driver and Application. Infinecon, 2011
- **J. RODRIGUEZ et al.** Multilevel voltage-source-converter topologies for industrial medium-voltage drives. *IEEE Trans. Ind. Electron.,* December 2007, vol. 54 (06), 2930-2945
- **A. NABAE ; I. TAKAHASHI ; H. AKAGI.** A new neutral-point-clamed PWM inverter. *IEEE Trans. Ind. Appl.,* September 1981, vol. IA-17 (05), 518-523
- **T. BRÜCKENER ; S. BERNET ; H. GÜLDNER.** The active NPC converter and its loss-balancing control. *IEEE Trans. Ind. Electron.,* June 2005, vol. 52 (3), 855-868
- **V. GUENEGUES et al.** A converter topology for high speed motor drive applications. *European Conf. Power Electronics and Applications,* 2009, 1-8
- **J. W. KOLAR ; F. C. ZACH.** A novel three-phase utility interface minimizing line current harmonics of high-power teleccomunications rectifier modules. *IEEE Trans. Ind. Electron.,* August 1997, vol. 44 (04), 456-467
- **Y. ZAHO ; Y. LI ; T. A. LIPO.** Force commutated three level boost type rectifier. *Industry Applications Society Annual Meeting,* 1993, 771-777
- **M. L. HELDWEIN ; S. A. MUSSA ; I. BARBI.** Three-phase multilevel PWM rectifiers based on conventional bidirectional converter. *IEEE Trans. Power Electron.,* March 2010, vol. 25 (03), 545-549
- **A. M. HAVA ; R. J. KERKMAN ; T. A. LIPO.** Single analytical and graphical methods for carrier-cased PWM-VSI drives. *IEEE Trans. Power Electron,* January 1999, vol. 14 (01), 49-61
- **M. LISERRRE ; F. BLAABJERG ; S. HANSEN.** Design and control of an LCL-filter-based three-phase active rectifier. *IEEE Trans. Ind. Appl.,* September 2005, vol. 41 (05), 1281-1291
- **R. G. HOFT ; H. S. PATEL.** Generalized techniques of harmonic elimination and voltage control in thyristor inverters: Part I - Harmonic elimination. *IEEE Trans. Ind. Appl.,* May 1973, vol. IA-9 (03), 310-317
- **R. G. HOFT ; H. PATEL.** Generalized techniques of harmonic elimination and voltage control in thyristor inverters: Part II - Voltage control techniques. *IEEE Trans. Ind. Appl.,* September 1974, vol. IA-10 (05), 666-673
- **B. K. BOSE.** Modern Poer Electronics, and AC Drives. Prentice Hall, 2002
- **A. -S.A. LUIZ ; B. J.C. FILHO.** Analysis of passive filters for high power three-level rectifiers. *34th Annual Conf. IEEE Industrial Electronics,* 2008, 3207-3212
- **A.-S.A. LUIZ ; B.J.C. FILHO.** Minimum reactive power filter design for high power converters. *13th Power Electronics Motion Control Conf.,* 2008, 1345-1352

- **J. PONTT ; J. RODRIGUEZ ; R. HUERTA.** Mitigation of none-limited harmonics of SHE PWM three-level multiphase three-phase active front end converters with low switching frequency for meeting standards IEEE-519-92. *IEEE Trans. Power Electron,* November 2004, vol. 19 (06), 1594-1600